# EUROPÄISCHE PATENTSCHRIFT

(11) **EP 3 235 362 B1**
(45) Veröffentlichungstag und Bekanntmachung des Hinweises auf die Patenterteilung: **03.10.2018**
(21) Anmeldenummer: 17401035.5
(22) Anmeldetag: 31.03.2017
(51) Int. Cl.: A01C 7/20, A01B 63/24, F16B 7/10, A01C 7/04

(54) **MEHRREIHIGE EINZELKORNSÄMASCHINE UND VERFAHREN ZUR EINSTELLUNG DIESER MEHRREIHIGEN EINZELKORNSÄMASCHINE**
MULTIPLE-ROW SINGLE SEED DRILL AND METHOD FOR ADJUSTING SAID MULTI-ROW SINGLE SEED DRILL
SEMOIR PNEUMATIQUE À PLUSIEURS RANGS ET PROCÉDÉ DE RÉGLAGE D'UN TEL SEMOIR PNEUMATIQUE À PLUSIEURS RANGS

(30) Priorität: 21.04.2016 DE 102016107374
(43) Veröffentlichungstag der Anmeldung: 25.10.2017
(73) Patentinhaber: Amazonen-Werke H. Dreyer GmbH & Co. KG, 49205 Hasbergen (DE)
(72) Erfinder: Kruse, Christian, 26349 Jade (DE); Bohlen, Eike, 28215 Bremen (DE)

(56) Entgegenhaltungen:
- EP-A1- 2 526 753
- EP-B1- 2 030 495
- WO-A1-2014/177229
- DE-U1-202004 017 673
- ES-A1- 2 324 574
- GB-A- 140 865

## Beschreibung

Die Erfindung betrifft eine mehrreihige Einzelkornsämaschine gemäß des Oberbegriffes des Patentanspruches 1 und ein Verfahren zur Einstellung dieser mehrreihigen Einzelkornsämaschine gemäß dem Oberbegriff des Patentanspruchs 10.

Eine derartige mehrreihige Einzelkornsämaschine und ein derartiges Verfahren sind in der DE 39 27 717 A1 beschrieben. Ein Rahmen einer landwirtschaftlichen Arbeitsmaschine weist zumindest ein zur Werkzeugaufnahme vorgesehenes, quer zur Fahrtrichtung angeordnetes, telekopierbar in ihrer Breite veränderbares Rahmenbauteil auf. An diesem Rahmenbauteil sind mehrere Arbeitselemente, welche als Saatgutausbringelemente, beispielsweise Säaggregate und/oder Säschare ausgebildet sind, mittels Gleitführungen aufweisenden Tragevorrichtungen verschiebbar angeordnet. Die Arbeitselemente sind untereinander mit Distanzhaltestäben verbunden, deren wirksame Länge über die Positionierung von Anschlagselementen entsprechend der gewünschten Abstände der Arbeitselemente zueinander voreinstellbar ist. Festgelegt werden die Positionen der Anschlagselemente mittels Stiftverbindungen, die in zueinander beabstandete feste Bohrungen im Distanzhaltestab verbracht werden.

Derartige stabförmige Distanzhalter werden auch in der EP 2 030 495 B1 beschrieben. Sie verbinden die Arbeitselemente untereinander und sind zum Einstellen des Abstandes zwischen den Arbeitselementen mit Löchern versehen. Diese Löcher dienen der Befestigung von Anschlagselementen.

Bei beiden Ausführungsformen werden durch das Ein- und Austeleskopieren des die Arbeitselemente tragenden Rahmenbauteils die äußeren Arbeitselemente bewegt. Das Einteleskopieren des Rahmenelements stellt ein Teleskopieren in eine erste Richtung dar, das Austeleskopieren ein Teleskopieren in eine zweite, also entgegengesetzte Richtung. Durch die mittels der Distanzhalter geschaffene Verbindung der Arbeitselemente untereinander werden ausgehend von dem äußersten Arbeitselement die inneren Arbeitselemente entsprechend der voreingestellten Abstände untereinander durch Gleiten entlang des Rahmenbauteils in ihre Arbeitsposition verbracht. Dabei erfolgt ein Teleskopieren des Rahmenelements bis alle Anschläge erreicht und somit die Arbeitspositionen aller Arbeitselemente erreicht sind. Beim Einteleskopieren des Rahmenbauteils werden die Arbeitselemente in analoger Weise wieder zusammengeschoben, bis die Straßentransportbreite der mehrreihigen Einzelkornsämaschine erreicht ist.
Die Voreinstellung der Distanzhalter erfolgt bei den beschriebenen Ausführungsformen stets bei einteleskopierter Einzelkornsämaschine. Ist die Einzelkornsämaschine auf Straßentransportbreite einteleskopiert, weisen die Arbeitselemente zueinander nur einen geringen Abstand auf. Ein Bediener muss die Voreinstellung der Distanzhalter zwischen den in diesem Maschinenzustand minimal beabstandeten Arbeitselementen vornehmen. Dies ist einerseits unkomfortabel, weil der wenige verfügbare Raum zwischen den Arbeitselementen die Arbeit an den oft schwer zugänglichen Distanzhaltern weiter erschwert. Andererseits ist der Aufenthalt des Bedieners zwischen schweren, beweglichen Maschinenteilen, wie den Arbeitselementen seitens der Produktsicherheit zu vermeiden bzw. die Aufenthaltsdauer auf das mögliche Minimum zu reduzieren.

Weitere teleskopierbare Rahmenelemente von Sämaschinen sind offenbart in EP 2 526 753 A1 und DE 20 2004 017 673 U1. Der Erfindung liegt daher die Aufgabe zugrunde, eine mehrreihige Einzelkornsämaschine sowie ein Verfahren zu schaffen, welche ein komfortables, sicheres und zeiteffektives Einstellen der Abstände der Arbeitselemente der Einzelkornsämaschine untereinander ermöglicht.
Diese Aufgabe wird erfindungsgemäß durch die Merkmale des Anspruchs 1 gelöst. Besonders zeiteffektiv ist die Einstellung der Sämaschine dadurch, dass die Voreinstellung der zumindest einen Distanzhaltervorrichtung unabhängig von der aktuellen Breite des teleskopierbaren Rahmenelements und/oder dem aktuellen gegenseitigen Abstand der Arbeitselemente untereinander durchführbar ist. Dazu ist es vorteilhaft, dass an dem Rahmenelement zumindest eine Rastschiene angeordnet ist, welche einen von mehreren Aussparungen gebildeten Rastbereich, Parkpositionen außerhalb des Rastbereichs sowie zumindest ein Rastelement zum Einrasten in diesem Rastbereich aufweist, wobei das Rastelement in einer den einzustellenden Abständen zwischen den Arbeitselementen entsprechenden Einrastposition der Rastschiene einrastet und geeignete Mittel aufweist, mit denen es in dieser Einrastposition oder in einer Parkposition gehalten wird. Das Rastelement wird formschlüssig in die Aussparungen des Rastbereichs eingebracht und rastet in den Aussparungen ein, so dass in dieser Einrastposition nicht entlang der Rastschiene verschiebbar ist.

Es sind geeignete Mittel vorgesehen, mit welchen das Rastelement sicher in der Einrastposition gehalten wird. Dazu eignet sich beispielsweise eine Federdruckbeaufschlagung, welche das Rastelement in die Aussparung drückt. Ebenso ist es vorteilhaft wenn diese Mittel geeignet sind, das Rastelement mit einstellbarem Druck in der Einrastposition zu fixieren und/oder geeignet sind, das Rastelement beispielsweise manuell mittels Hebel und/oder Griff oder automatisiert mittels einer Aktorik in die Einrastposition zu verbringen und/oder aus der Einrastposition in eine Parkposition zu verbringen.

Die Parkpositionen befinden sich außerhalb des Rastbereichs. Darunter ist zu verstehen, dass sie sich beispielsweise denkrecht oberhalb einer Aussparung befinden und dort das Rastelement mittels der geeigneten Mittel gehalten wird oder dass sie sich versetzt zu den Aussparungen beispielsweise auf den die Aussparungen trennenden Stegen befinden, über denen das Rastelement beispielsweise mittels der geeigneten Mittel gehalten wird oder auf denen das Rastelement federdruckbeaufschlagt abgelegt wird. Das Rastelement stellt das erste Anschlagselement dar. Somit kann es für die Festlegung der Abstände der Arbeitselemente zueinander genutzt werden.

Das Rastelement kann zum Entriegeln von seiner Einrastposition in die Parkpositionen außerhalb des Rastbereichs mittels geeigneter Mittel verbracht werden. Dabei entsprechen die geeigneten Mittel den zuvor genannten. Innerhalb der Rastschiene sind das erste Anschlagselement und ein zweites Anschlagselement relativ zueinander bewegbar angeordnet. Befindet sich das erste Anschlagselement in einer Parkposition, können sich das erste und das zweite Anschlagselement berührungsfrei gegeneinander bewegen. Darunter fällt auch eine Relativbewegung beider Rastelemente, welche ohne Anschlagswirkung aneinander vorbei erfolgt.

Das zweite Anschlagselement ist einem Arbeitselement zugeordnet. Das erste und das zweite Anschlagselement sind dazu geeignet, dass beim Teleskopieren des Rahmenelements in eine erste Richtung und mit dieser ersten Richtung verbundener Relativbewegung beider Anschlagselemente aufeinander zu das zweite Anschlagselement das erste Anschlagselement unter Aufhebung der Anschlagswirkung unterläuft. Ein Unterlaufen unter Aufhebung der Anschlagswirkung meint dabei eine Relativbewegung beider Anschlagselemente aufeinander zu, bei der Kontakt zwischen beiden Anschlagselementen hergestellt wird und bei der durch geeignete Mittel, beispielsweise durch geeignete Ausgestaltung wenigstens eines der beiden Anschlagselemente, beispielsweise eine Spreizwirkung erzielt wird, vermittels derer eines der beiden Anschlagselemente zwischen der Rastschiene und dem anderen Anschlagselement hindurch schiebbar ist. Das erste Anschlagselement wird nach dem vollständigen Unterlaufen durch das zweite Anschlagselement durch die geeigneten Mittel, mit denen das erste Anschlagelement in der Einrastposition oder Parkposition gehalten wird, erneut in seine Einrastposition verbracht.

Bei einem Teleskopieren in eine zweite Richtung läuft das erste Anschlagselement unter Aufrechterhaltung der Anschlagswirkung gegen das zweite Anschlagselement, wobei das erste Anschlagselement das zweite Anschlagselement verschiebt und dabei das mit dem zweiten Anschlagselement verbundene Arbeitselement in die den voreingestellten Abständen zwischen den Arbeitselementen entsprechenden Position mitnimmt. Dadurch wird mithilfe einer Stellbewegung, die die Einzelkornsämaschine auf die gewünschte Arbeitsbreite bringt, auch die korrekte, den Voreinstellungen entsprechende Positionierung der Arbeitselemente erreicht, ohne, dass ein weiterer Arbeitsschritt notwendig ist.

Eine besonders vorteilhafte Ausgestaltung der Erfindung ist gegeben, wenn die Voreinstellung der zumindest einen Distanzhaltevorrichtung bei auf maximale Breite austeleskopiertem Rahmenelement erfolgt. Dadurch ist der Abstand zwischen den einzelnen Arbeitselementen besonders groß. Der Bediener kann bequem zwischen die Arbeitselemente treten und die Voreinstellung der Distanzhaltevorrichtung vornehmen, ohne in beengten Verhältnissen arbeiten zu müssen. Werden die ersten Anschlagselemente dazu sämtlich in eine Parkposition verbracht, ist die Rastschiene entriegelt und die Arbeitselemente werden beim Austeleskopieren des Rahmenbauteils in die zueinander maximal möglichen Abstände mitgenommen. In diesem Fall ist der Raum zwischen den Arbeitselementen maximal und der Komfort bei der Voreinstellung der Distanzhaltevorrichtung für den Bediener am größten. Für den Bediener sind die Arbeiten einfacher möglich sind und können daher schneller abgeschlossen werden. Dies verbessert die Produktsicherheit, da dadurch die Verletzungsgefahr durch den verkürzten Aufenthalt zwischen beweglichen Maschinenteilen deutlich reduziert wird.

Ein weiterer Vorteil wird dadurch erreicht, dass die zweiten Anschlagselemente zumindest annähernd keilförmig ausgestaltet sind und eine erste verjüngend zulaufende Seite sowie eine der ersten Seite gegenüberliegende zweite nicht verjüngend zulaufende zweite Seite aufweisen. Durch die keilförmige Ausgestaltung der ersten Seite wird bewirkt, dass das zweite Anschlagselement im Falle einer Relativbewegung beider Anschlagselemente aufeinander zu das erste Anschlagselement unterlaufen kann. Sobald dabei zwischen beiden Anschlagselementen Kontakt hergestellt ist, schiebt sich die keilförmige Seite zwischen die Rastschiene und das erste Anschlagselement. Rastschiene und erstes Anschlagselement werden auf diese Weise auseinandergespreizt und das zweite Anschlagselement schiebt sich zwischen ihnen hindurch.

Es ist vorteilhaft, wenn die verjüngend zulaufenden ersten Seiten zweier benachbarter zweiter Anschlagselemente einander zugewandt sind. Sind an einer Einzelkornsämaschine mehrere Rastschienen angeordnet, die alle erste und zweite Anschlagselemente aufweisen, benötigt diese Bauform den geringsten Bauraum. So spart diese Ausgestaltung Platz und Gewicht und steigert somit die Wirtschaftlichkeit der Einzelkornsämaschine.

Eine vorteilhafte Ausgestaltung ist dadurch gegeben, dass die Voreinstellung der Abstände zwischen den Arbeitselementen einzeln für jedes Arbeitselement einstellbar ist. Durch diese Ausgestaltung ist es möglich, individuelle Abstände zwischen den einzelnen Arbeitselementen zu wählen, wodurch die Einsatzmöglichkeiten der Einzelkornsämaschine flexibler gestaltet werden können. Gleichzeitig kann der Bediener sicher sein, dass jedes Arbeitselement die von ihm gewünschte Position einnimmt.

Ebenso ist vorteilhaft, dass eine Entriegelung der ersten Anschlagselemente für alle ersten Anschlagselemente an zentraler Stelle der mehrreihigen Einzelkornsämaschine durchführbar ist. Muss der Bediener für eine Entriegelung der Rastschiene nicht alle ersten Anschlagselemente der Einzelkornsämaschine einzeln in eine Parkposition verbringen, spart dies eine signifikante Menge Zeit, was den Einstellprozess der Einzelkornsämaschine deutlich wirtschaftlicher gestaltet. Die Entriegelung dient dem Austeleskopieren des Rahmenbauteils auf seine maximale Breite unter Mitnahme der Arbeitselemente, wobei diese bei Erreichen der maximalen Breite des Rahmenbauteils ihre maximal möglichen Abstände zueinander einnehmen und dem Bediener damit der maximale Raum zur Voreinstellung der Distanzhaltevorrichtung zur Verfügung steht.

Ein weiterer Vorteil wird erreicht, indem der Abstand zwischen den Arbeitselementen an zentraler Stelle gemeinsam für alle Arbeitselemente einstellbar ist. Der Abstand der Arbeitselemente zueinander wird durch entsprechendes Positionieren der ersten Anschlagselemente in der Rastschiene erreicht. Ist dies mittels einer geeigneten Vorrichtung an zentraler Stelle der Einzelkornsämaschine durchführbar, sinkt der Arbeitsaufwand des Bedieners für die Voreinstellung der Distanzhaltevorrichtungen erheblich, da eine gleichzeitige Voreinstellung für alle Distanzhaltevorrichtungen über die zentrale Stelle erfolgt. Dies bewirkt eine erhebliche Zeiteinsparung und steigert daher die Wirtschaftlichkeit des Einstellvorgangs und der Einzelkornsämaschine erheblich.

Es ist vorteilhaft, wenn der Abstand zwischen jeweils zwei Arbeitselementen unabhängig von dem Abstand zwischen zwei anderen Arbeitselementen ist. Durch Einstellung individueller Abstände der Arbeitselemente zueinander kann die Einzelkornsämaschine deutlich flexibler auf verschiedene Gegebenheiten angepasst werden, wodurch sich die Zahl ihrer Einsatzmöglichkeiten erhöht.

Es ist von Vorteil, wenn ein für alle Arbeitselemente gemeinsamer Abstand zwischen den Arbeitselementen einstellbar ist. Dadurch wird erreicht, dass die Einzelkornsämaschine ein stets einheitliches Säbild einhält und die einzelnen Saatreihen den optimalen, voreingestellten Reihenabstand aufweisen.

Ein Verfahren zur Einstellung einer mehrreihigen Einzelkornsämaschine mit einem Rahmen, der zumindest ein quer zur Fahrtrichtung angeordnetes, teleskopierbar in seiner Breite veränderbares Rahmenelement aufweist, und mit mehreren an diesem Rahmenelement angeordneten Arbeitselementen, welche als Saatgutausbringeinrichtung, wie beispielsweise Säaggregate und/oder Säschare, ausgebildet und zur Einstellung des gegenseitigen Abstands während des Teleskopiervorgangs des Rahmenelements entlang des Rahmenelements unter Mitnahme durch geeignete erste Anschlagselemente verschiebbar sind, wobei die Einstellung der gegenseitigen Abstände der Arbeitselemente zueinander mittels Voreinstellung zumindest einer Distanzhaltervorrichtung in diskreten Schritten erfolgt, beruht auf Merkmalen des Anspruchs 10.

Dabei werden die als erste Anschlagselemente dienenden Rastelemente durch Verbringen von einer Einrastposition in der Rastschiene mittels geeigneter Mittel in eine Parkposition außerhalb des Rastbereichs der Rastschiene entriegelt. Anschließend wird das teleskopierbare Rahmenelement auf eine zur Voreinstellung der Distanzhaltervorrichtung geeignete Breite austeleskopiert, wobei die zweiten Anschlagselemente die sich in ihrer Parkposition befindenden ersten Anschlagselemente unterlaufen. Anschließend wird zur Einstellung der gegenseitigen Abstände zwischen den Arbeitselementen die Voreinstellung der Distanzhaltervorrichtung durch Einrasten der als erste Anschlagselemente dienenden federdruckbeaufschlagten Rastelemente an einer geeigneten, dem gewünschten Abstand zwischen den Arbeitselementen entsprechenden Position der Rastschiene vorgenommen. Anschließend wird das Rahmenelement wieder auf die höchstens der maximal zulässigen Straßentransportbreite entsprechenden minimalen Breite einteleskopiert, wobei die ersten Anschlagselemente von zweiten, den Arbeitselementen zugeordneten, in der Rastschiene bewegbar angeordneten, zum Unterlaufen der ersten Anschlagselemente geeigneten zweiten Anschlagselemente unter Aufhebung der Anschlagswirkung unterlaufen werden können und die ersten Anschlagselemente nach vollständigem Unterlaufen durch die geeigneten Mittel zurück in die eingestellte Einrastposition verbracht werden. Anschließend laufen bei erneutem Austeleskopieren des Rahmenelements die ersten Anschlagselemente unter Aufrechterhaltung der Anschlagswirkung gegen die zweiten Anschlagselemente, wobei sie während des Teleskopierens des Rahmenelements die Arbeitselemente vermittels der zweiten Anschlagselemente in die den voreingestellten Abständen zwischen den Arbeitselementen entsprechenden Positionen mitnehmen.

Weitere Einzelheiten der Erfindung sind der Beispielsbeschreibung und den Zeichnungen zu entnehmen. Die Zeichnungen zeigen
- Fig.1: ein teleskopierbares Rahmenbauteil einer mehrreihigen Einzelkornsämaschine im vollständig austeleskopierten Zustand mit mehreren angebauten Arbeitselementen in perspektivischer Ansicht von schräg vorne oben,
- Fig.2: ein teleskopierbares Rahmenbauteil einer mehrreihigen Einzelkornsämaschine im vollständig austeleskopierten Zustand mit an diesem Rahmenbauteil angeordneten Arbeitselementen und mehreren Rastschienen in perspektivischer Ansicht von schräg hinten oben,
- Fig.3: eine Rastschiene mit einem ersten Anschlagselement in Parkposition in perspektivischer Ansicht von schräg hinten,
- Fig.4: mehrere untereinander verbundene Rastschienen für ein teleskopierbares Rahmenbauteil in vollständig einteleskopiertem Zustand in perspektivischer Ansicht von schräg hinten oben,
- Fig.5: mehrere untereinander verbundene Rastschienen für ein teleskopierbares Rahmenbauteil in vollständig austeleskopiertem Zustand in perspektivischer Ansicht von schräg hinten oben,
- Fig.6: ein zumindest annähernd keilförmig ausgebildetes zweites Anschlagselement in perspektivischer Ansicht,
- Fig.7: eine Rastschiene mit einem ersten Anschlagselement in Parkposition und einem zweiten Anschlagselement, welches das erste unterläuft in perspektivischer Ansicht von schräg hinten,
- Fig.8: eine Rastschiene mit einem ersten Anschlagselement, welches ein zweites Anschlagselement während des Einteleskopierens unter Aufhebung der Anschlagswirkung aus der Einrastposition drückt und dieses unterläuft in perspektivischer Ansicht von schräg hinten,
- Fig.9: eine Rastschiene mit einem ersten Anschlagselement, welches nach vollständigem Unterlaufen durch das zweite Anschlagselement zurück in die Einrastposition springt in perspektivischer Ansicht von schräg hinten und
- Fig.10: eine Rastschiene mit einem ersten Anschlagselement, welches beim Austeleskopieren ein zweites Anschlagselement unter Beibehaltung der Anschlagswirkung mit sich zieht in perspektivischer Ansicht von schräg hinten.

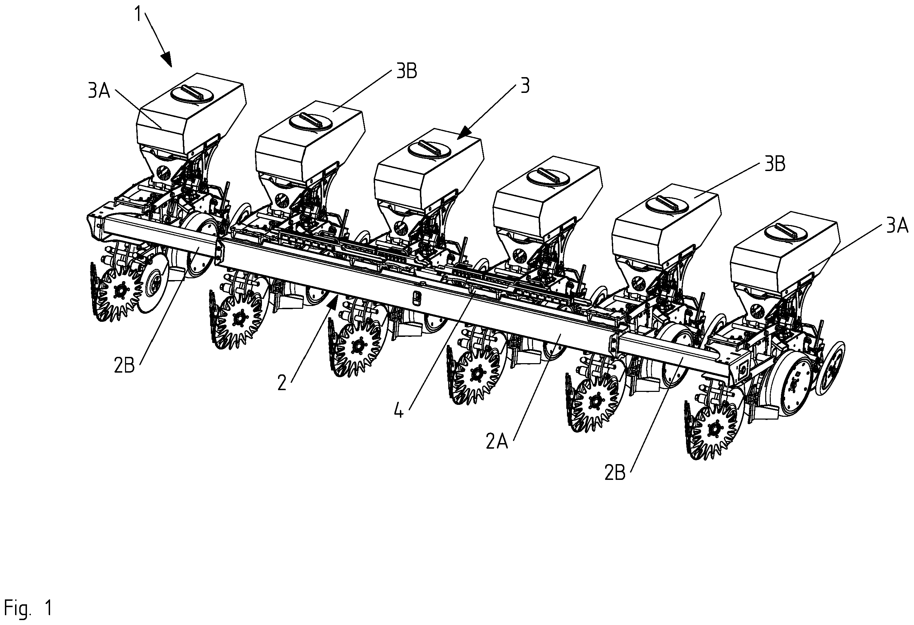

Der teilweise dargestellte Rahmen einer mehrreihigen Einzelkornsämaschine 1 weist ein als Teleskopbalken 2 ausgebildetes Rahmenbauteil auf, welches sich quer zur Fahrtrichtung erstreckt und zur Aufnahme von mehreren Arbeitselementen 3 vorgesehen ist. Der Teleskopbalken 2 weist einen rohrförmigen Mittelbalken 2A mit zwei jeweils von der Außenseite in den Mittelbalken 2A eingeschobenen Seitenbalken 2B auf und ist teleskopierbar ausgeführt. Der Teleskopbalken 2 trägt im in Fig. 1 gezeigten Ausführungsbeispiel sechs Arbeitselemente 3, welche als Einzelkornsäaggregate ausgeführt sind. Die Arbeitselemente 3 sind mittels Tragevorrichtungen 4 verschiebbar an dem Teleskopbalken 2 befestigt. Hierbei ist an jedem äußeren Ende eines Seitenbalkens 2B ein Einzelkornsäaggregat befestigt, wobei das Einzelkornsäaggregat fest mit dem äußeren Ende des Seitenbalkens 2B verbunden ist, während die übrigen vier Einzelkornsäaggregate dem Mittelbalken 2A zugeordnet und auf dem Mittelbalken 2A verschiebbar angeordnet sind.

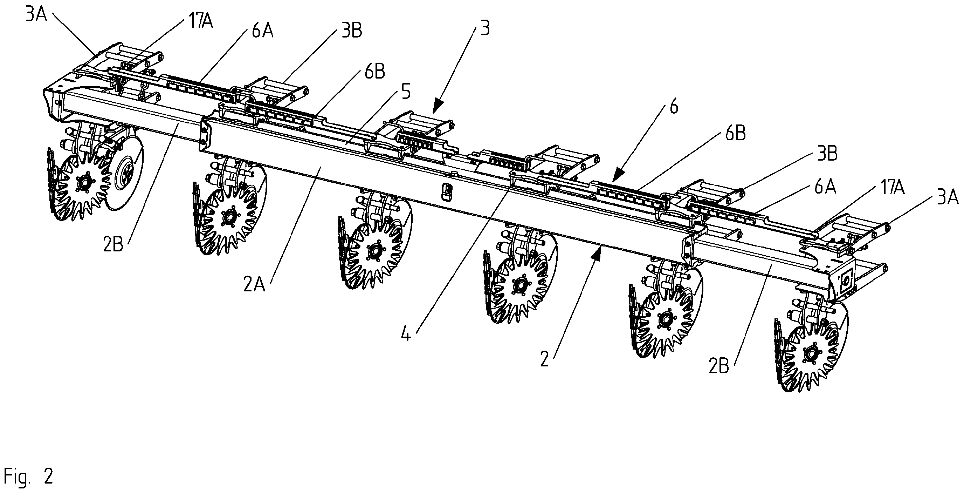

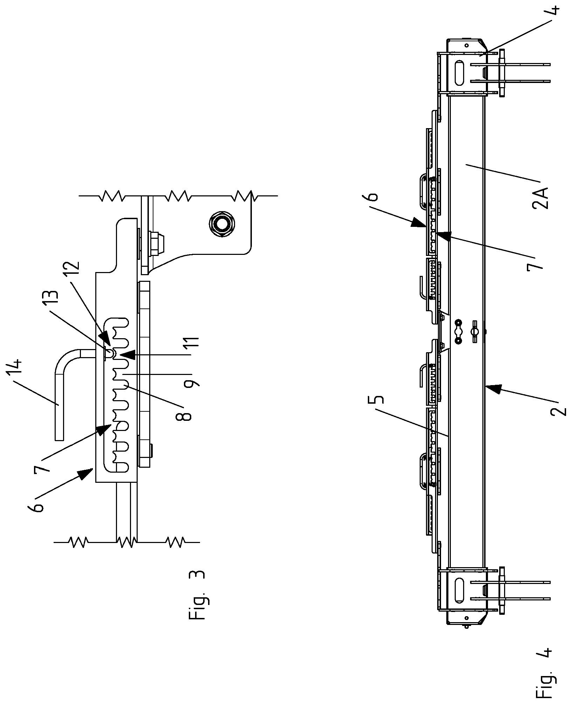

An der Oberseite 5 des Teleskopbalkens 2 sind mehrere als Distanzhaltevorrichtung dienende Rastschienen 6 angeordnet, gezeigt in Fig. 2. Die Rastschienen 6 weisen jeweils einen Rastbereich 7 auf, welcher aus einer finger- oder kammartigen, alternierenden Anordnung von Aussparungen 8 und Stegen 9 gebildet wird und in den Figuren 3, 7 sowie 8 bis 10 gezeigt ist. Die Aussparungen 8 stellen die Einrastpositionen 10 des Rastbereichs 7 dar. In der gezeigten Ausführungsform weisen die Stege 9 Parkpositionen 11 auf. Die Aussparungen 8 sind geeignet Rastelemente 12 aufzunehmen, welche als erste Anschlagselemente 13 dienen. Mittels geeigneter Mittel, welche im gewählten Ausführungsbeispiel als federdruckbeaufschlagter Hebel 14 ausgeführt sind, wird das erste Anschlagselement 13 mittels Federdruck in einer Einrastposition 10 oder in einer Parkposition 11 fixiert. Zusätzlich dient der Hebel 14 dazu, das erste Anschlagselement 13 zwischen Einrastposition 10 und Parkposition 11 zu verbringen. Befinden sich die ersten Anschlagselemente 13 in Parkposition 11, so sind sie entriegelt, gezeigt in Fig. 3.

Durch die Positionierung der ersten Anschlagselemente 13 mithilfe der Hebel 14 wird der Abstand der Arbeitselemente 3 zu einander eingestellt. Im gewählten Ausführungsbeispiel muss ein Bediener dazu zwischen die Arbeitselemente 3 treten und zum Einstellen der gewünschten Voreinstellung der ersten Anschlagselemente 13 im Rastbereich 7 die Hebel 14 manuell betätigen.

Die minimale Breite des teleskopierbaren, sich quer zur Fahrtrichtung erstreckenden Teleskopbalkens 2 entspricht höchstens der maximal zulässigen Straßentransportbreite. Die minimale Breite erreicht der Teleskopbalken 2 durch vollständiges Einteleskopieren, gezeigt in Fig. 4, was einer Bewegung in eine erste Richtung 15, die auch als Einteleskopierrichtung zu bezeichnen ist, entspricht. In vollständig einteleskopiertem Zustand sind die Abstände der Arbeitselemente 3 minimal, sodass der Bediener die Hebel 14 zur Voreinstellung der Positionen der ersten Anschlagselemente 13 im Rastbereich 7 nur schwer erreichen kann.

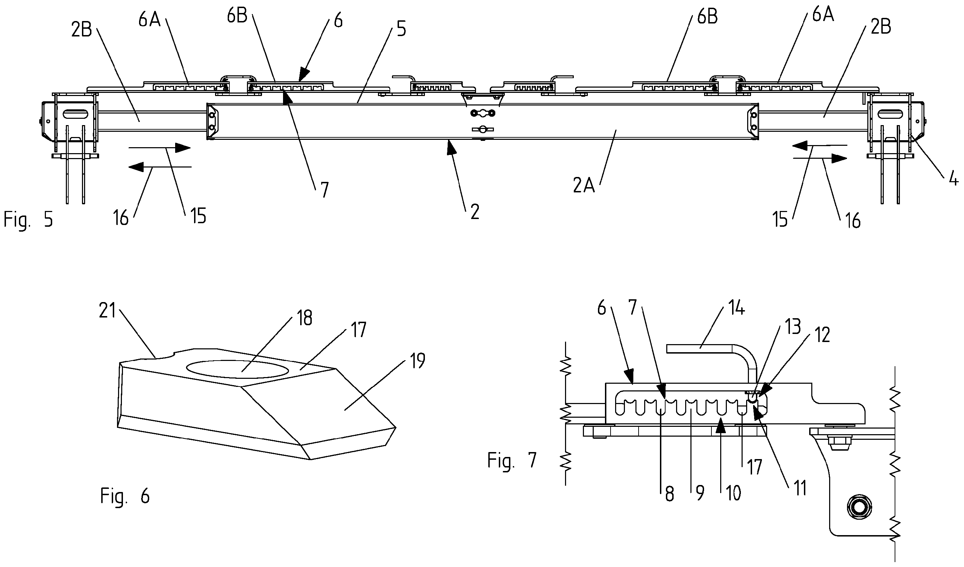

Daher werden die ersten Anschlagselemente 13 mittels der Hebel 14 in einem ersten Schritt lediglich durch Verbringen von Einrastpositionen 10 in Parkpositionen 11 verbracht, gezeigt in Fig. 3. Bei einem anschließenden Austeleskopieren, entsprechend einem Teleskopieren in eine zweite Richtung 16, die auch als Austeleskopierrichtung zu bezeichnen ist, des Teleskopbalkens 2 auf seine maximale Breite, gezeigt in Fig. 5, werden hydraulisch die Seitenbalken 2B des Teleskoprahmens 2 von der Maschinenmitte aus gesehen zu beiden Seiten ausgefahren. Dabei werden die an den Seitenbalken 2B angeordneten äußeren Arbeitselemente 3A nach außen bewegt. Mit den Arbeitselementen 3 sind in den Rastschienen 6 verschiebbare zweite Anschlagselemente 17 fest verbunden. Im gewählten Beispiel wird die Verbindung zwischen den Arbeitselementen 3 und den zweiten Anschlagselementen 17 über eine Schraubverbindung durch eine dafür vorgesehene Aussparung 18 es zweiten Anschlagselements 17 erreicht. Das zweite Anschlagselement 17 ist in Fig. 6 gezeigt. Die äußeren Arbeitselemente 3A sind mittels Schraubverbindungen 17A fest mit dem äußeren Ende der äußeren Rastschienen 6A verbunden. Dadurch werden die äußeren Rastschienen 6A nach außen gezogen, bis deren inneres Ende gegen die zweiten Anschlagselemente 17 der den äußeren Arbeitselementen 3A benachbarten Arbeitselemente 3B läuft. Die Zugbewegung nach außen überträgt sich damit auf die Arbeitselemente 3B und auf die Rastschienen 6B. Dieses Bewegungsprinzip setzt sich iterativ fort, bis alle Arbeitselemente 3 und alle relativ zueinander beweglichen Rastschienen 6 bewegt sind und die maximale Breite des Teleskoprahmens 2 erreicht ist.

Während eines Teleskopiervorgangs bewegen sich die zweiten Anschlagselemente 17 relativ zu den ersten Anschlagselementen 13 innerhalb einer Rastschiene 6. Befinden sich die ersten Anschlagselemente 13 in Parkpositionen 11 und sind somit entriegelt, schieben sich die zweiten Anschlagselemente 17 gleitend an den ersten Anschlagelementen 13 vorbei, Fig. 7, bis sie am Ende der Rastschiene 6 angelangen. Im entriegelten Zustand der ersten Anschlagselemente 13 wirken beim Teleskopieren in die Austeleskopierrichtung 16 die Enden der Rastschienen 6 als Anschlag, so dass die Arbeitselemente 3 in diesem entriegelten Zustand beim vollständigen Austeleskopieren des Teleskoprahmens 2 in Positionen gezogen werden, die ihrem maximal möglichen Abstand zueinander entsprechen.

Der Bediener hat bei einer derart austeleskopierten Einzelkornsämaschine 1 mit maximal beabstandeten Arbeitselementen 3 viel Platz zur Verfügung, um zwischen die Arbeitselemente 3 zu treten und die Voreinstellung der ersten Anschlagselemente 13 vorzunehmen. Dazu verbringt der Bediener mittels der Hebel 14 jedes erste Anschlagselement 13 in eine dem für die Arbeitselemente 3 gewünschten Abstand entsprechende Einrastposition 10, in der das erste Anschlagselement mittels Federdruck fixiert wird.

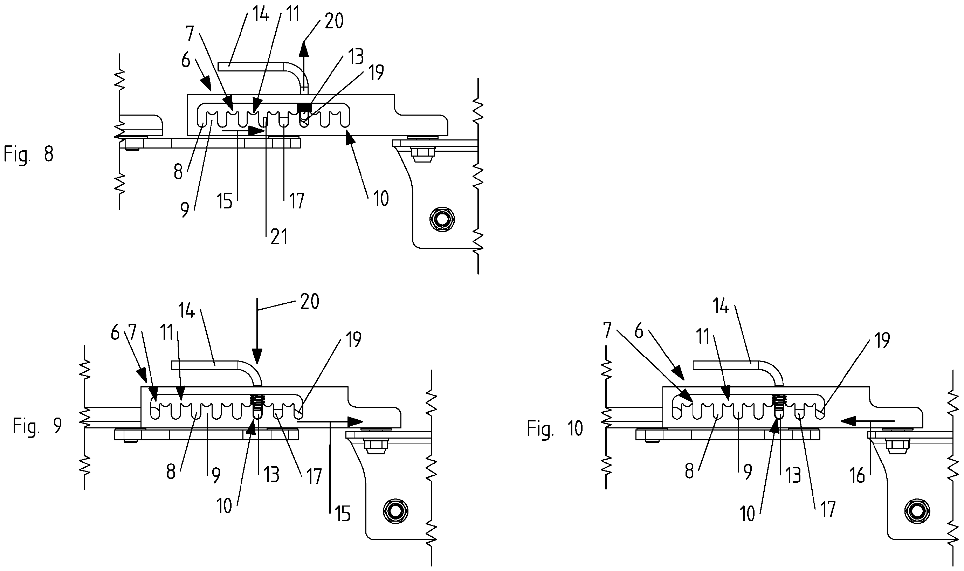

Im Anschluss wird der Teleskoprahmen 2 wieder auf seine minimale Breite einteleskopiert. Bei diesem Teleskopieren in die erste Richtung 15 ist es denkbar, der der Einrastposition 10 der ersten Anschlagselemente 13 entsprechende neue Abstand der Arbeitselemente 3 zueinander enger ist, als der aktuelle Abstand der Arbeitselemente 3. Erstes Anschlagselement 13 und zweites Anschlagselement 14 bewegen sich innerhalb der Rastschiene 6 aufeinander zu, wobei die verjüngend zulaufende erste Seite 19 des zumindest annähernd keilförmig ausgestalteten zweiten Anschlagselements 17 dem ersten Anschlagselement 13 zugewandt ist. Bei Kontakt zwischen erstem Anschlagselement 13 und zweitem Anschlagselement 17 bewirkt die keilförmige erste Seite 19 des zweiten Anschlagselements eine Spreizung, mittels derer das erste Anschlagselement 13 aus der Einrastposition 10 heraus in einer zur Einteleskopierrichtung 15 senkrechte Richtung 20 angehoben wird, gezeigt in Fig. 8. Somit ist es dem zweiten Anschlagselement 17 bei Teleskopieren des Teleskoprahmens 2 in eine Einteleskopierrichtung 15 möglich, unter Aufhebung der Anschlagswirkung des ersten Anschlagselements 13 zwischen dem ersten Anschlagselement 13 und der Rastschiene 6 hindurch zu gleiten und das erste Anschlagselement 13 somit zu unterlaufen. Hat das zweite Anschlagselement 17 das erste Anschlagselement 13 vollständig unterlaufen, springt das erste Anschlagselement 13 vermittels des Federdrucks entlang der Achse der senkrechten Richtung 20 zurück in vorherige Einrastposition 10, wie in Fig. 9 gezeigt. Die Einzelkornsämaschine 1 erreicht nach vollständigem Einteleskopieren ihre Straßentransportbreite und kann mit voreingestellten Rastschienen 6 zum Einsatzort verbracht werden.

Ein erneutes Austeleskopieren entsprechend einem Telekopieren in die Austeleskopierrichtung 16 bewirkt eine erneute Relativbewegung zwischen erstem Anschlagselement 13 und zweitem Anschlagselement 17 aufeinander zu, wobei im Fall des Teleskopierens in die Austeleskopierrichtung 16 die nicht keilförmige zweite Seite 21 des zweiten Anschlagselements 17 dem ersten Anschlagselement 13 zugewandt ist. Kommen beide Anschlagselemente 13, 17 in Kontakt, ist kein Unterlaufen des ersten Anschlagselements 13 durch das zweite Anschlagselement 17 möglich. Unter Aufrechterhaltung der Anschlagswirkung werden die zweiten Anschlagselemente 17 vermittels der ersten Anschlagselemente 13 gleitend entlang des Teleskoprahmens 2 bewegt. Durch die feste Verbindung zwischen zweiten Anschlagselementen 17 und Arbeitselementen 3 werden auf diese Weise die Arbeitselemente 3 in eine den Einrastpositionen 10 der ersten Anschlagselemente 13 entsprechende Position gezogen, wie in Fig. 10 gezeigt. Sie nehmen dabei den über die Voreinstellung der Einrastpositionen 10 der ersten Anschlagselemente 13 gewählten Abstand zueinander ein.

Die Gesamtbreite der Einzelkornsämaschine 1 wird dabei durch die Abstände der Arbeitselemente 3 zu einander bestimmt, da der Teleskopiervorgang in die Austeleskopierrichtung 16 automatisch stoppt, wenn alle Anschläge erreicht sind.

## Patentansprüche

1. Mehrreihige Einzelkornsämaschine (1) mit einem Rahmen, der zumindest ein quer zur Fahrtrichtung angeordnetes, teleskopierbar in seiner Breite veränderbares Rahmenelement (2) aufweist, und mit mehreren an diesem Rahmenelement (2) angeordneten Arbeitselementen (3), welche als Saatgutausbringeinrichtung, wie beispielsweise Säaggregate und/oder Säschare, ausgebildet und zur Einstellung des gegenseitigen Abstands während des Teleskopiervorgangs des Rahmenelements (2) entlang des Rahmenelements (2) unter Mitnahme durch geeignete erste Anschlagselemente (13) verschiebbar sind, wobei die Einstellung der gegenseitigen Abstände der Arbeitselemente (3) zueinander mittels Voreinstellung zumindest einer Distanzhaltervorrichtung in diskreten Schritten erfolgt, wobei die Voreinstellung der zumindest einen Distanzhaltervorrichtung unabhängig von der aktuellen Breite des teleskopierbaren Rahmenelements (2) und/oder dem aktuellen gegenseitigen Abstand der Arbeitselemente (3) untereinander durchführbar ist, **dadurch gekennzeichnet, dass** an dem Rahmenelement (2) zumindest eine Rastschiene (6) angeordnet ist, welche einen von mehreren Aussparungen (8) gebildeten Rastbereich (7), Parkpositionen (11) außerhalb des Rastbereich (7) sowie zumindest ein Rastelement (12) zum Einrasten in diesem Rastbereich (7) aufweist, wobei das Rastelement (12) in einer den einzustellenden Abständen zwischen den Arbeitselementen (3) entsprechenden Einrastposition (10) der Rastschiene (6) einrastet und geeignete Mittel aufweist, mit denen es in dieser Einrastposition (10) oder in einer Parkposition (11) gehalten wird,
dass dieses Rastelement (12) das erste Anschlagselement (13) darstellt,
dass das Rastelement (12) zum Entriegeln von seiner Einrastposition (10) in die Parkpositionen (11) außerhalb des Rastbereichs (7) mittels geeigneter Mittel verbracht (14) werden kann,
dass innerhalb der Rastschiene (6) das erste Anschlagselement (13) und ein zweites Anschlagselement (17) relativ zueinander bewegbar angeordnet sind, und das zweite Anschlagselement (17) einem Arbeitselement (3) zugeordnet ist und das erste und das zweite Anschlagselement (13,17) dazu geeignet sind, dass bei Teleskopieren des Rahmenelements (2) in eine erste Richtung (15) und mit dieser ersten Richtung (15) verbundener Relativbewegung beider Anschlagselemente (13,17) aufeinander zu das zweite Anschlagselement (17) das erste Anschlagselement (13) unter Aufhebung der Anschlagswirkung unterläuft,
dass das erste Anschlagselement (13) nach dem vollständigen Unterlaufen durch das zweite Anschlagselement (17) durch die geeigneten Mittel mit denen das erste Anschlagelement (13) in der Einrastposition (10) oder Parkposition (11) gehalten wird, erneut in seine Einrastposition (10) verbracht wird und,
dass bei einem Teleskopieren in eine zweite Richtung (16) das erste Anschlagselement (13) unter Aufrechterhaltung der Anschlagswirkung gegen das zweite Anschlagselement (17) läuft, wobei das erste Anschlagselement (13) das zweite Anschlagselement (17) verschiebt und dabei das mit dem zweiten Anschlagselement (17) verbundene Arbeitselement (3) in die den voreingestellten Abständen zwischen den Arbeitselementen (3) entsprechenden Position mitnimmt.

2. Mehrreihige Einzelkornsämaschine (1) nach Anspruch 1, **dadurch gekennzeichnet, dass** die Voreinstellung der zumindest einen Distanzhaltevorrichtung bei auf maximale Breite austeleskopiertem Rahmenelement (2) erfolgt.

3. Mehrreihige Einzelkornsämaschine (1) nach zumindest einem der vorangegangenen Ansprüche, **dadurch gekennzeichnet, dass** die zweiten Anschlagselemente (17) zumindest annähernd keilförmig ausgestaltet sind und eine erste verjüngend zulaufende Seite (19) sowie eine der ersten Seite (19) gegenüberliegende zweite nicht verjüngend zulaufende zweite Seite (21) aufweisen.

4. Mehrreihige Einzelkornsämaschine (1) nach zumindest einem der vorangegangenen Ansprüche, **dadurch gekennzeichnet, dass** die verjüngend zulaufenden ersten Seiten (19) zweier benachbarter zweiter Anschlagselemente (17) einander zugewandt sind.

5. Mehrreihige Einzelkornsämaschine (1) nach zumindest einem der vorangegangenen Ansprüche, **dadurch gekennzeichnet, dass** die Voreinstellung der Abstände zwischen den Arbeitselementen (3) einzeln für jedes Arbeitselement (3) einstellbar ist.

6. Mehrreihige Einzelkornsämaschine nach zumindest einem der vorangegangenen Ansprüche, **dadurch gekennzeichnet, dass** die Entriegelung der ersten Anschlagselemente (13) für alle ersten Anschlagselemente (13) an zentraler Stelle der mehrreihigen Einzelkornsämaschine (1) durchführbar ist.

7. Mehrreihige Einzelkornsämaschine (1) nach zumindest einem der vorangegangenen Ansprüche **dadurch gekennzeichnet, dass** der Abstand zwischen den Arbeitselementen (3) an zentraler Stelle gemeinsam für alle Arbeitselemente (3) einstellbar ist.

8. Mehrreihige Einzelkornsämaschine (1) nach zumindest einem der vorangegangenen Ansprüche **dadurch gekennzeichnet, dass** der Abstand zwischen jeweils zwei Arbeitselementen (3) unabhängig von dem Abstand zwischen zwei anderen Arbeitselementen (3) ist.

9. Mehrreihige Einzelkornsämaschine (1) nach zumindest einem der vorangegangenen Ansprüche **dadurch gekennzeichnet, dass** ein für alle Arbeitselemente (3) gemeinsamer Abstand zwischen den Arbeitselementen (3) einstellbar ist.

10. Verfahren zur Einstellung einer mehrreihigen Einzelkornsämaschine (1) mit einem Rahmen, der zumindest ein quer zur Fahrtrichtung angeordnetes, teleskopierbar in seiner Breite veränderbares Rahmenelement (2) aufweist, und mit mehreren an diesem Rahmenelement (2) angeordneten Arbeitselementen (3), welche als Saatgutausbringeinrichtung, wie beispielsweise Säaggregate und/oder Säschare, ausgebildet und zur Einstellung des gegenseitigen Abstands während des Teleskopiervorgangs des Rahmenelements (2) entlang des Rahmenelements (2) unter Mitnahme durch geeignete erste Anschlagselemente (13) verschiebbar sind, wobei die Einstellung der gegenseitigen Abstände der Arbeitselemente (3) zueinander mittels Voreinstellung zumindest einer Distanzhaltervorrichtung in diskreten Schritten erfolgt, **dadurch gekennzeichnet, dass**
an dem Rahmenelement (2) zumindest eine Rastschiene (6) angeordnet ist, welche einen von mehreren Aussparungen gebildeten Rastbereich (7), Parkpositionen (11) außerhalb des Rastbereichs (7) sowie zumindest ein Rastelement (12) zum Einrasten in diesem Rastbereich (7) aufweist, wobei das Rastelement (12) in einer den einzustellenden Abständen zwischen den Arbeitselementen (3) entsprechenden Einrastposition (10) der Rastschiene (6) einrastet und geeignete Mittel (14) aufweist, mit denen es in dieser Einrastposition (10) oder in einer Parkposition (11) gehalten wird und dieses Rastelement (12) das erste Anschlagselement (13) darstellt,
dass die als erste Anschlagselemente (13) dienenden Rastelemente (12) durch Verbringen von einer Einrastposition (10) in der Rastschiene (6) mittels geeigneter Mittel (14) in eine Parkposition (11) außerhalb des Rastbereichs (7) der Rastschiene (6) entriegelt werden,
anschließend das teleskopierbare Rahmenelement (2) auf eine zur Voreinstellung der Distanzhaltervorrichtung geeignete Breite austeleskopiert wird, wobei die zweiten Anschlagselemente (17) die sich in ihrer Parkposition (11) befindenden ersten Anschlagselemente (13) unterlaufen,
anschließend zur Einstellung der gegenseitigen Abstände zwischen den Arbeitselementen (3) die Voreinstellung der Distanzhaltervorrichtung durch Einrasten der als erste Anschlagselemente (13) dienenden Rastelemente (12) an einer geeigneten, dem gewünschten Abstand zwischen den Arbeitselementen (3) entsprechenden Position der Rastschiene (6) vorgenommen wird und die Rastelemente (12) durch geeignete Mittel in der Einrastposition (10) fixiert werden,
anschließend das Rahmenelement (2) wieder auf die höchstens der maximal zulässigen Straßentransportbreite entsprechenden minimalen Breite einteleskopiert wird, wobei die ersten Anschlagselemente (13) von zweiten, den Arbeitselementen (17) zugeordneten, in der Rastschiene (6) bewegbar angeordneten, zum Unterlaufen der ersten Anschlagselemente (13) geeigneten zweiten Anschlagselemente (17) unter Aufhebung der Anschlagswirkung unterlaufen werden können und die ersten Anschlagselemente (13) nach vollständigem Unterlaufen durch geeignete Mittel zurück in die eingestellte Einrastposition (10) verbracht werden,
anschließend bei erneutem Austeleskopieren des Rahmenelements (2) die ersten Anschlagselemente (13) unter Aufrechterhaltung der Anschlagswirkung gegen die zweiten Anschlagselemente (17) laufen, wobei sie während des Teleskopierens des Rahmenelements (2) die Arbeitselemente (3) vermittels der zweiten Anschlagselemente (17) in die den voreingestellten Abständen zwischen den Arbeitselementen (3) entsprechenden Positionen mitnehmen.

## Claims

1. Multiple-row single seed drill (1) with a frame which has at least one frame element (2) which is arranged transversely with respect to the direction of travel and is changeable telescopically in its width, and with a plurality of working elements (3) which are arranged on said frame element (2), are designed in the form of seed dispenser equipment, such as, for example, sowing units and/or sowing coulters, and, for the setting of the mutual distance during the telescoping operation of the frame element (2), are displaceable along the frame element (2) by being carried along by suitable first stop elements (13), wherein the setting of the mutual distances of the working elements (3) from one another takes place in discrete steps by means of pre-setting at least one spacer device, wherein the pre-setting of the at least one spacer device can be carried out independently of the current width of the telescopic frame element (2) and/or of the current mutual distance of the working elements (3) from one another, **characterized in that**
at least one latching rail (6) is arranged on the frame element (2), said latching rail having a latching region (7) formed by a plurality of recesses (8), parking positions (11) outside the latching region (7) and at least one latching element (12) for latching in said latching region (7), wherein the latching element (12) latches in a latching position (10) of the latching rail (6) corresponding to the distances to be set between the working elements (3), and has suitable means with which said latching element is held in said latching position (10) or in a parking position (11),
**in that** said latching element (12) is the first stop element (13),
**in that**, for unlocking purposes, the latching element (12) can be brought (14) by means of suitable means from its latching position (10) into the parking positions (11) outside the latching region (7),
**in that**, within the latching rail (6), the first stop element (13) and a second stop element (17) are arranged moveably relative to each other, and the second stop element (17) is assigned to a working element (3), and the first and the second stop element (13, 17) are suitable to the effect that, during the telescoping of the frame element (2) in a first direction (15) and a relative movement, which is associated with said first direction (15), of the two stop elements (13, 17) towards each other, the second stop element (17) runs under the first stop element (13) cancelling the stop effect, **in that** the first stop element (13) after being completely underrun by the second stop element (17) is brought again into its latching position (10) by the suitable means, with which the first stop element (13) is held in the latching position (10) or parking position (11), and **in that**, during telescoping in a second direction (16), the first stop element (13) moves against the second stop element (17) while maintaining the stop effect, wherein the first stop element (13) displaces the second stop element (17) and, in the process, carries along the working element (3), which is connected to the second stop element (17), into the position corresponding to the pre-set distances between the working elements (3).

2. Multiple-row single seed drill (1) according to Claim 1, **characterized in that** the pre-setting of the at least one spacer divide takes place when the frame element (2) is extended telescopically to maximum width.

3. Multiple-row single seed drill (1) according to at least either of the preceding claims, **characterized in that** the second stop elements (17) are configured to be at least approximately wedge-shaped and have a first side (19) converging in a tapering manner and a second side (21) which lies opposite the first side (19) and does not converge in a tapering manner.

4. Multiple-row single seed drill (1) according to at least one of the preceding claims, **characterized in that** the first sides (19), which converge in a tapering manner, of two adjacent second stop elements (17) face each other.

5. Multiple-row single seed drill (1) according to at least one of the preceding claims, **characterized in that** the pre-setting of the distances between the working elements (3) can be set individually for each working element (3).

6. Multiple-row single seed drill according to at least one of the preceding claims, **characterized in that** the unlocking of the first stop elements (13) can be carried out for all of the first stop elements (13) at a central point of the multiple-row single seed drill (1).

7. Multiple-row single seed drill (1) according to at least one of the preceding claims, **characterized in that** the distance between the working elements (3) can be set jointly for all of the working elements (3) at a central point.

8. Multiple-row single seed drill (1) according to at least one of the preceding claims, **characterized in that** the distance between in each case two working elements (3) is independent of the distance between two other working elements (3).

9. Multiple-row single seed drill (1) according to at least one of the preceding claims, **characterized in that** a distance which is common for all of the working elements (3) can be set between the working elements (3).

10. Method for setting a multiple-row single seed drill (1) with a frame which has at least one frame element (2) which is arranged transversely with respect to the direction of travel and is changeable telescopically in its width, and with a plurality of working elements (3) which are arranged on said frame element (2), are designed in the form of seed dispenser equipment, such as, for example, sowing units and/or sowing coulters, and, for the setting of the mutual distance during the telescoping operation of the frame element (2), are displaceable along the frame element (2) by being carried along by suitable first stop elements (13), wherein the setting of the mutual distances of the working elements (3) from one another takes place in discrete steps by means of pre-setting at least one spacer device, **characterized in that**
at least one latching rail (6) is arranged on the frame element (2), said latching rail having a latching region (7) formed by a plurality of recesses, parking positions (11) outside the latching region (7) and at least one latching element (12) for latching in said latching region (7), wherein the latching element (12) latches in a latching position (10) of the latching rail (6) corresponding to the distances to be set between the working elements (3), and has suitable means (14) with which said latching element is held in said latching position (10) or in a parking position (11), and said latching element (12) is the first stop element (13),
**in that** the latching elements (12) serving as first stop elements (13) are unlocked by being brought from a latching position (10) in the latching rail (6) into a parking position (11) outside the latching region (7) of the latching rail (6) by means of suitable means (14), subsequently, the telescopic frame element (2) is extended telescopically to a width suitable for pre-setting the spacer device, wherein the second stop elements (17) run under the first stop elements (13), which are in their parking position (11),
subsequently, for setting the mutual distances between the working elements (3), the pre-setting of the spacer device is carried out by latching the latching elements (12) serving as first stop elements (13) at a suitable position of the latching rail (6) corresponding to the desired distance between the working elements (3) and the latching elements (12) are fixed in the latching position (10) by suitable means,
subsequently the frame element (2) is retracted telescopically to the minimum width corresponding at most to the maximally permissible road transport width, wherein the first stop elements (13) can be underrun by second second stop elements (17), which are assigned to the working elements (17), are arranged moveably in the latching rail (6) and are suitable for underrunning the first stop elements (13), with the stop effect being cancelled, and the first stop elements (13) after being completely underrun are brought back into the set latching position (10) by suitable means,
subsequently, upon renewed extension telescopically of the frame element (2), the first stope elements (13) run against the second stop elements (17) with the stop effect being maintained, wherein, during the telescoping of the frame element (2), said first stop elements carry along the working elements (3) by means of the second stop elements (17) into the position corresponding to the pre-set distances between the working elements (3).

## Revendications

1. Semoir monograine (1) à plusieurs rangées, pourvu d'un cadre qui comporte au moins un élément de cadre (2) télescopable, placé à la transversale de la direction de déplacement, variable dans sa largeur et pourvu de plusieurs éléments de travail (3) placés sur ledit élément de cadre (2), lesquels sont conçus sous la forme de systèmes semeurs, comme par exemple des éléments semeurs et/ou des socs semeurs, et pour le réglage de l'écart mutuel pendant le processus de télescopage de l'élément de cadre (2) sont déplaçables le long de l'élément de cadre (2) en étant entraînés par des premiers éléments de butée (13) adaptés, le réglage der écarts mutuels entre les éléments de travail (3) ayant lieu dans des étapes discrètes par préréglage d'au moins un dispositif espaceur,
le préréglage de l'au moins un dispositif espaceur étant réalisable indépendamment de la largeur actuelle de l'élément de cadre (2) télescopable et/ou de l'écart mutuel actuel des éléments de travail (3) entre eux,
**caractérisé en ce que** sur l'élément de cadre (2) est placé au moins un rail d'enclenchement (6), lequel comporte une zone d'enclenchement (7) formée de plusieurs encoches (8), positions de stationnement (11) à l'extérieur de la zone d'enclenchement (7), ainsi que d'au moins un élément d'enclenchement (12) destiné à s'enclencher dans ladite zone d'enclenchement (7), l'élément d'enclenchement (12) s'enclenchant dans une position d'enclenchement (10) du rail d'enclenchement (6) qui correspond à l'un des écarts qui doivent être réglés entre les éléments de travail (3) et comportant des moyens adaptés, à l'aide desquels il est maintenu dans ladite position d'enclenchement (10) ou dans une position de stationnement (11),
**en ce que** ledit élément d'enclenchement (12) représente le premier élément de butée (13),
**en ce que** pour le déverrouillage à partir de sa position d'enclenchement (10), l'élément d'enclenchement (12) peut être amené dans les positions de stationnement (11) à l'extérieur de la zone d'enclenchement (7) à l'aide de moyens (14) adaptés,
**en ce qu'**à l'intérieur du rail d'enclenchement (6), le premier élément de butée (13) et un deuxième élément de butée (17) sont placés en étant mobiles l'un par rapport à l'autre et le deuxième élément de butée (17) est affecté à un élément de travail (3) et le premier et le deuxième éléments de butée (13, 17) sont aptes à ce que, lors du télescopage de l'élément de cadre (2) dans une première direction (15) et lors d'un déplacement relatif relié avec cette première direction (15), des deux éléments de butée (13, 17) l'un vers l'autre le deuxième élément de butée (17) contourne le premier élément de butée (13) en supprimant l'effet de butée,
**en ce qu'**une fois que le deuxième élément de butée (17) a entièrement passé sous lui, le premier élément de butée (13) est ramené dans sa position d'enclenchement (10) par les moyens adaptés par lesquels le premier élément de butée (13) est maintenu dans la position d'enclenchement (10) ou dans la position de stationnement (11) et,
**en ce que** lors d'un télescopage dans une deuxième direction (16), le premier élément de butée (13) se déplace en maintenant l'effet de butée contre le deuxième élément de butée (17), le premier élément de butée (13) déplaçant le deuxième élément de butée (17) et entraînant à cet effet l'élément de travail (3) relié avec le deuxième élément de butée (17) dans la position correspondant aux écarts préréglés entre les éléments de travail (3).

2. Semoir monograine (1) à plusieurs rangées selon la revendication 1, **caractérisé en ce que** le préréglage de l'au moins un dispositif espaceur a lieu lorsque l'élément de cadre (2) est déployé à sa largeur maximale.

3. Semoir monograine (1) à plusieurs rangées selon au moins l'une quelconque des revendications précédentes, **caractérisé en ce que** les deuxièmes éléments de butée (17) sont conçus au moins approximativement en conformation cunéiforme, et comportent une première face convergente (19) en rétrécissement et une deuxième face (21) non convergente en rétrécissement, au vis-à-vis de la première face (19).

4. Semoir monograine (1) à plusieurs rangées selon au moins l'une quelconque des revendications précédentes, **caractérisé en ce que** les premières faces (19) convergentes en rétrécissement de deux deuxièmes éléments de butée (17) se font face.

5. Semoir monograine (1) à plusieurs rangées selon au moins l'une quelconque des revendications précédentes, **caractérisé en ce que** le préréglage des écarts entre les éléments de travail (3) est réglable individuellement pour chaque élément de travail (3).

6. Semoir monograine à plusieurs rangées selon au moins l'une quelconque des revendications précédentes, **caractérisé en ce que** pour tous les premiers éléments de butée (13), le déverrouillage des premiers éléments de butée (13) est réalisable sur un point centralisé du semoir monograine (1) à plusieurs rangées.

7. Semoir monograine (1) à plusieurs rangées selon au moins l'une quelconque des revendications précédentes, **caractérisé en ce que** l'écart entre les éléments de travail (3) sur un point central est réglable en commun pour tous les éléments de travail (3).

8. Semoir monograine (1) à plusieurs rangées selon au moins l'une quelconque des revendications précédentes, **caractérisé en ce que** l'écart entre chaque fois deux éléments de travail (3) est indépendant de l'écart entre deux autres éléments de travail (3).

9. Semoir monograine (1) à plusieurs rangées selon au moins l'une quelconque des revendications précédentes, **caractérisé en ce qu'**un écart commun pour tous les éléments de travail (3) est réglable entre les éléments de travail (3).

10. Procédé, destiné au réglage d'un semoir monograine (1) à plusieurs rangées pourvu d'un cadre, qui comporte au moins un élément de cadre (2) télescopable, placé à la transversale de la direction de déplacement, variable dans la largeur, et de plusieurs éléments de travail (3) placés sur ledit élément de cadre (2), lesquels sont conçus sous la forme de systèmes semeurs, comme par exemple des éléments semeurs et/ou des socs semeurs, et pour le réglage de l'écart mutuel pendant le processus de télescopage de l'élément de cadre (2) sont déplaçables le long de l'élément de cadre (2) en étant entraînés par des premiers éléments de butée (13) adaptés, le réglage der écarts mutuels entre les éléments de travail (3) ayant lieu dans des étapes discrètes, par préréglage d'au moins un dispositif espaceur, **caractérisé en ce que**
sur l'élément de cadre (2) est placé au moins un rail d'enclenchement (6), lequel comporte une zone d'enclenchement (7) formée de plusieurs encoches, positions de stationnement (11) à l'extérieur de la zone d'enclenchement (7), ainsi que d'au moins un élément d'enclenchement (12) destiné à s'enclencher dans ladite zone d'enclenchement (7), l'élément d'enclenchement (12) s'enclenchant dans une position d'enclenchement (10) du rail d'enclenchement (6) qui correspond à l'un des écarts qui doivent être réglés entre les éléments de travail (3) et comportant des moyens (14) adaptés, à l'aide desquels il est maintenu dans ladite position d'enclenchement (10) ou dans une position de stationnement (11) et ledit élément d'enclenchement (12) représentant le premier élément de butée (13),
**en ce que** les éléments d'enclenchement (12) qui font office de premiers éléments de butée (13) sont déverrouillés par passage à l'aide de moyens (14) adaptés d'une position d'enclenchement (10) dans le rail d'enclenchement (6) dans une position de stationnement (11) à l'extérieur de la zone d'enclenchement (7) du rail d'enclenchement (6),
par la suite l'élément de cadre (2) télescopable est déployé à une largeur adaptée pour le préréglage du dispositif espaceur, les deuxièmes éléments de butée (17) contournant les premiers éléments de butée (13) qui se trouvent dans leur position de stationnement (11),
par la suite, pour le réglage des écarts mutuels entre les éléments de travail (3), il est procédé au préréglage du dispositif espaceur par enclenchement des éléments d'enclenchement (12) qui font office de premiers éléments de butée (13) dans une position adaptée du rail d'enclenchement (6) qui correspond à l'écart souhaité entre les éléments de travail (3), et les éléments d'enclenchement (12) sont fixés par des moyens adaptés dans la position d'enclenchement (10),
par la suite, l'élément de cadre (2) est à nouveau rétracté à la largeur maximale qui correspond au plus à la largeur maximale autorisée pour le transport routier, les premiers éléments de butée (13) pouvant être contournés par des deuxièmes deuxièmes éléments de butée (17) associés aux éléments de travail (17), placés de manière mobile dans le rail d'enclenchement (6), adaptés pour contourner les premiers éléments de butée (13), en annulant l'effet de butée et après contournement complet, les premiers éléments de butée (13) sont ramenés par des moyens adaptés dans la position d'enclenchement (10) réglée,
par la suite, par déploiement réitéré de l'élément de cadre (2), les premiers éléments de butée (13) se déplacent contre les deuxièmes éléments de butée (17), en maintenant l'effet de butée, alors que pendant le télescopage de l'élément de cadre (2), ils entraînent les éléments de travail (3) au moyen des deuxièmes éléments de butée (17) dans les positions qui correspondent aux écarts préréglés entre les éléments de travail (3).
